# EUROPEAN PATENT APPLICATION

(11) **EP 4 848 221 A1**
(43) Date of publication of application: **02.12.2026**
(21) Application number: 26181885.0
(22) Date of filing: 29.05.2026
(51) Int. Cl.: G06V 10/54, G06V 10/20, G06V 10/80, G06V 20/64, G06V 20/68

(54) **TEXTURE-BASED ITEM RECOGNITION**

(30) Priority: 30.05.2025 US 202519224329
(71) Applicant: NCR Voyix Corporation, Atlanta, GA 30308 (US)
(72) Inventor: SHAHRYAR, Sahir, Atlanta (US); MORGAN, Kip Oliver, Atlanta (US); GILLIS, Daniel Peter, Atlanta (US); NANNAPURAJU, Dheeraj Raju, Hyderabad (IN)
(74) Representative: Secerna LLP

(57) **Abstract**

Texture-based item recognition for self-checkout terminals integrates depth sensor technology with existing red-green-blue (RGB) camera item recognition systems to enhance item recognition accuracy. A three-dimensional point cloud data of item surfaces is generated from a depth-enabled sensor image of an item. The point cloud data is processed through mesh generation and texture mapping to create a standardized two-dimensional texture map, and machine learning analyzes surface characteristics to provide a list of candidate items. This technology refines item suggestions by comparing texture-based identification results with existing RGB camera item recognition systems, presenting customers with a more focused and accurate list of potential items during self-checkouts, thereby improving transaction efficiency and accuracy.

## Description

### Background

Self-checkout (SCO) systems that utilize red-green-blue (RGB) cameras for produce identification face significant challenges in accurately identifying items during checkout transactions. Current systems may present a list of candidate produce items that an imaged item may be based solely on color and shape characteristics of the item captured by the RGB camera data. This leads to slower transaction times and diminished customer experience when irrelevant suggestions are displayed. For example, items like lemons and bananas may be suggested together as candidate items for selection simply because they share a yellow color. Similarly, avocados and eggplants may both be suggested as candidate items due to their similar shapes. These limitations of RGB-based identification systems create inefficiencies in the checkout process and impact customer satisfaction.

### Summary

According to a first aspect of the present invention there is provided a method comprising:
receiving, by a processor of a self-checkout (SCO) terminal, a depth-sensor image and a red-green-blue (RGB) camera image of an item during a transaction;
generating, by the processor, a three-dimensional (3D) surface representation of the item from the depth-sensor image;
creating, by the processor, a two-dimensional (2D) texture map from the 3D surface representation;
analyzing, by the processor, the 2D texture map using a texture-based machine learning model (MLM) trained on surface textures to generate texture-based candidate item identifiers for the item;
selecting highest confidence candidate item identifiers from among the texture-based candidate item identifiers and RGB-based candidate item identifiers provided by an RGB item recognizer; and
providing, by the processor, a configured number of the highest confidence candidate item identifiers to a transaction interface during the transaction based on the selecting.

Aptly, receiving further comprises receiving the depth-sensor image from a light detection and ranging (LiDAR) sensor or an infrared sensor.

Aptly, generating the 3D surface representation comprises:
creating a point cloud from the depth-sensor image;
removing outlier pixels from the point cloud; and
generating a mesh model connecting points from a cleaned point cloud.

Aptly, creating the 2D texture map comprises unfolding the 3D surface representation into a 2D format using color variations to represent height differences.

Aptly, creating the 2D texture map comprises processing a UV mapping algorithm with the 3D surface representation to generate a 2D format.

Aptly, selecting comprises removing particular RGB-based candidate item identifiers that do not appear in the texture-based candidate item identifiers and ordering remaining item identifiers based on confidence scores from the texture-based MLM.

Aptly, providing the configured number of highest confidence candidate item identifiers comprises applying a confidence threshold to determine which item identifiers to include.

Aptly, the method further comprises training the texture-based MLM during silent mode operations where textured data is labeled and particular items are identified based on user selections.

Aptly, the method further comprises providing the texture-based MLM as a centralized MLM deployed across multiple enterprises or as a local MLM deployed for regionally available items.

Aptly, the method further comprises:
obtaining particular images and particular descriptions for the highest confidence candidate item identifiers; and
presenting the particular images and the particular descriptions within a picklist interface screen during the transaction.

Aptly, the method further comprises training the texture-based MLM to analyze surface characteristics comprising roughness, waviness, and lay of item surfaces based on provided 2D texture maps generated for corresponding item images.

According to a second aspect of the present invention there is provided a method, the method comprising:
receiving depth sensor data and red-green-blue (RGB) camera data for an item during a self-checkout (SCO) transaction;
generating a three-dimensional (3D) surface representation of the item from the depth sensor data;
creating a two-dimensional (2D) texture representation from the 3D surface representation;
analyzing, by a first machine learning model (MLM), the 2D texture representation to generate texture-based item suggestions;
analyzing, by a second MLM, the RGB camera data to generate visual-based item suggestions;
filtering the visual-based item suggestions by removing items that are not present in the texture-based item suggestions; and
presenting filtered item suggestions ordered by confidence scores through a transaction interface during the SCO transaction.

Aptly, generating the 3D surface representation comprises:
creating a point cloud from the depth sensor data;
removing noise from the point cloud; and
generating a mesh model from a cleaned point cloud.

Aptly, creating the 2D texture representation comprises:
performing UV mapping on the 3D surface representation; and
generating a texture map representing surface characteristics.

Aptly, filtering further comprises:
determining particular confidence scores for matching items between the texture-based item suggestions and the visual-based item suggestions;
combining the particular confidence scores to generate final confidence values; and
ordering the filtered item suggestions based on the final confidence values.

Aptly, the method further comprises, processing the first MLM and the second MLM in parallel during the SCO transaction.

Aptly, the method further comprises enabling, by the 2D texture representation, classification of produce items having similar colors or shapes but different surface textures.

Aptly, the method further comprises:
collecting training data across multiple SCO terminals during actual customer SCO transactions; and
periodically training the first MLM using the training data.

According to a third aspect of the present invention there is provided a system, comprising:
a server;
a self-checkout (SCO) terminal;
a red-green-blue (RGB) camera;
a depth sensor; and
at least one processor configured to:
   capture depth sensor data and RGB image data for an item during a SCO transaction at the SCO terminal;
   process the depth sensor data to generate a three-dimensional (3D) surface model;
   create a two-dimensional (2D) texture map from the 3D surface model;
   analyze, by a first MLM, the 2D texture map to generate texture-based item candidates;
   analyze, by a second MLM, the RGB image data to generate visual-based item candidates;
   filter the visual-based item candidates using the texture-based item candidates; and
   present filtered item candidates ordered by confidence scores on a display of the SCO terminal during the SCO transaction for user item selection.

Aptly, the at least one processor is further configured to:
collect, by the first MLM operating in a silent mode of operation, texture data during user SCO transactions at the SCO terminal and other SCO terminals;
label user identified item selections for corresponding items during the user SCO transactions;
creating a training dataset from the texture data and user identified item selections; and
training the first MLM on the training dataset.

### Brief Description of the Drawings

FIG. 1 is a diagram of a system for texture-based item recognition, according to an example embodiment.
FIG. 2 is diagram of an architecture for the system, according to an example embodiment.
FIG. 3 is a flow diagram of a method for texture-based item recognition, according to an example embodiment.
FIG. 4 is a flow diagram of another method for texture-based item recognition according to an example embodiment.
FIG. 5 is a flow diagram of still another method for texture-based item recognition, according to an example embodiment.

### Detailed Description

Current retail self-checkout (SCO) systems rely heavily on red-green-blue (RGB) camera-based produce identification systems that analyze basic visual characteristics of an item such as color and shape. These systems, which can only capture and analyze two-dimensional color and shape data, frequently encounter technical limitations that impact both operational efficiency and customer satisfaction. .

These limitations become particularly evident when dealing with produce items that share similar visual characteristics. Conventional systems often cannot effectively distinguish between items that have comparable colors or shapes, but which differ in other important physical characteristics. This results in candidate item suggestions that include irrelevant items, requiring customers to scroll through multiple options to find their actual purchased item.

The impact of these limitations extends beyond mere inconvenience. Transaction times are increased as customers navigate through extensive lists of suggested candidate items, leading to longer queue times and reduced throughput at SCO stations or terminals. Additionally, customer confidence in the SCO system diminishes when presented with clearly irrelevant suggestions, potentially affecting their overall shopping experience and willingness to use self-checkout options.

Current RGB camera-based produce identification systems are not capable of capturing and analyzing surface texture characteristics of items, which presents a significant technical problem with respect to item recognition, particularly in the case of items that have similar colors and/or shapes, but which can be differentiated more easily based on other visual characteristics. Due to this technical limitation of not being able to leverage distinguishing features of produce items beyond color and shape, RGB camera-based produce identification systems tend to produce over-inclusive lists of suggested candidate items that, leading to decreased accuracy in identification and increased transaction times.

Embodiments of the technology disclosed herein solves the aforementioned technical problem and enhances item or produce identification accuracy by incorporating depth sensor data into existing RGB camera item identification systems. Embodiments of the disclosed technology provide a technical solution that utilizes point cloud generation, mesh creation, and texture mapping to capture and analyze three-dimensional surface characteristics of produce items. This data is processed through a machine learning model (MLM) trained on surface texture patterns, enabling more precise identification by comparing results with existing item recognition systems to generate more accurate and refined candidate item lists.

In an embodiment, a depth-enabled sensor, such as LiDAR or infrared (IR) technology, works in conjunction with existing RGB cameras to capture comprehensive produce data. The depth sensor generates a point cloud representation of the produce surface, while simultaneous RGB image capture maintains compatibility with existing systems.

In an embodiment, the captured point cloud data undergoes preprocessing to remove noise and outlier pixels, ensuring data quality. This cleaned data then proceeds through mesh generation, where the system connects the point cloud data points to create a three-dimensional representation of the produce surface.

In an embodiment, the methods and system perform texture extraction and UV mapping on the generated mesh. This process involves unfolding the three-dimensional representation into a two-dimensional format, utilizing color variations to represent height differences and surface characteristics. The resulting standardized texture map serves as input for the MLM analysis.

In an embodiment, the system employs a MLM trained specifically on produce surface textures. The MLM analyzes the texture maps and generates confidence scores for potential produce matches. This analysis occurs in parallel to existing RGB-based identification processes.

In an embodiment, the methods and system compare the results from the texture-based MLM with suggestions from the existing RGB-based identification system. Items appearing in the RGB-based suggestions but absent from the texture-based results are removed from the final suggestion list. The remaining items are ordered based on confidence scores, with the top-ranked items presented to the customer through the transaction interface during a SCO.

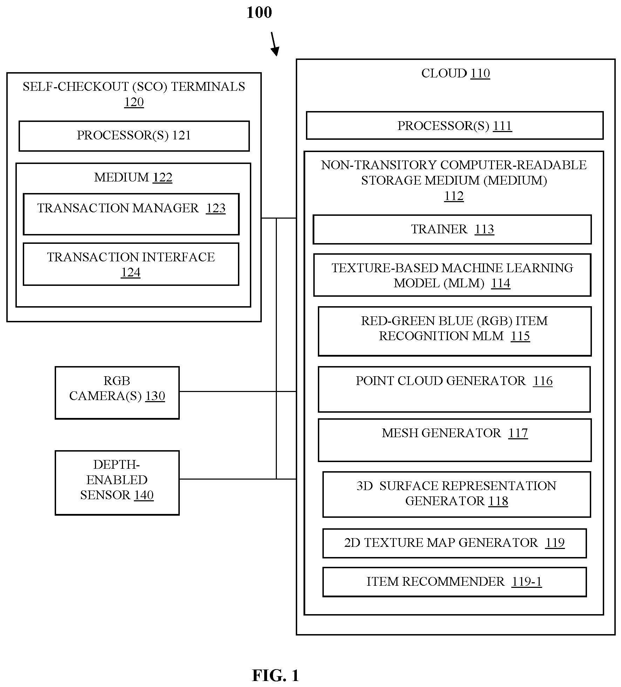

FIG. 1 is a diagram of a system 100 for texture-based item recognition, according to an example embodiment. Notably, the components are shown schematically in simplified form, with only those components relevant to understanding of the embodiments being illustrated.

Furthermore, the various components (that are identified in system 100) are illustrated and the arrangement of the components are presented for purposes of illustration only. Notably, other arrangements with more or less components are possible without departing from the teachings of a texture-based item recognition, presented herein and below.

System 100 includes a cloud 110, one or more self-checkout (SCO) terminals 120, one or more red-green-blue (RGB) cameras and at least one depth-enabled sensor 140. Cloud 110 includes at least one processor 111 and a non-transitory computer-readable storage medium (hereinafter "medium") 112, which includes instructions for a machine learning model (MLM) trainer 113, a texture-based MLM 114, RGB item recognition MLM 115, a point cloud generator 116, a mesh generator 117, a three dimensional (3D) surface representation generator 118, a two dimensional (2D) texture map generator 119, and an item recommender 119-1. The instructions when executed by processor 111 cause processor 111 to perform processing or operations discussed herein and below with respect to 113-119-1.

Each SCO terminal 120 includes at least one processor 121 and medium 122, which includes instructions for a transaction manager 123 and a transaction interface 124. The instructions when executed by processor 121 cause processor 121 to perform processing or operations discussed herein and below with respect to 123-124.

The transaction manager 123 controls the transaction interface 124 during SCO transactions at SCO terminal 120. When a customer places a produce item on a counter of the SCO terminal 120, the transaction interface 124 presents picklist screens with suggested items to the customer for selection.

The RGB camera 130 captures color image data of items during SCO transactions while the depth-enabled sensor 140 captures depth data of the items. The depth-enabled sensor 140 may comprise a LiDAR sensor or an infrared (IR) sensor that captures detailed surface information needed for texture analysis.

The point cloud generator 116 processes the depth data from sensor 140 to create a 3D point cloud representation of the item surface. The mesh generator 117 removes noise and outlier pixels from the point cloud data and generates a mesh model by connecting the cleaned point cloud data points.

The 3D surface representation generator 118 creates a 3D surface model from the mesh. The 2D texture map generator 119 performs UV mapping on the 3D surface representation to create a standardized 2D texture map that represents the surface characteristics of the item.

The texture-based MLM 114 analyzes the 2D texture maps to generate texture-based item suggestions with confidence scores. The RGB item recognition MLM 115 independently analyzes the RGB camera images to generate visual-based item suggestions with confidence scores.

The item recommender 119-1 obtains the suggested item lists separately from both texture-based MLM 114 and RGB item recognition MLM 115. The item recommender 119-1 then removes any item suggestions that appear in the RGB item recognition MLM 115 list but are not present in the texture-based MLM 114 list. The remaining items are ordered based on the confidence scores from both MLMs (114 and 115).

The item recommender 119-1 provides a configurable number of top-ranked item identifiers to the transaction manager 123. The transaction manager 123 then controls the transaction interface 124 to obtain and present corresponding item images and descriptions within picklist interface screens of the transaction interface 124 for customer selection during the SCO transaction.

The MLM trainer 113 operates in a silent mode during actual customer transactions to collect training data across multiple SCO terminals 120. For example, during a SCO transaction, depth-enabled sensor 140 provides depth data for an item, MLM trainer 113 processes and labels the depth data by processing 116-119 to generate a labeled 2D texture map. The customer or user selects the actual item from a picklist screen and the actual item identifier or code is saved as the expected output of the texture-based MLM 114 during training when presented with the corresponding 2D texture map for the customer's item. MLM trainer 113 generates a training data set during the silent mode of operation comprised of 2D texture maps for items and actual item codes. Periodically, MLM trainer 113 retrains texture-based MLM 114 using the training data set. This creates a unique continuously learning for texture-based MLM 114.

In an embodiment, the texture-based MLM 114 is a convolutional neural network (CNN). In an embodiment, the texture-based MLM 114 is a vision transformer (ViT). In an embodiment, the texture-based MLM 114 is a hybrid CNN-transformer.

In an embodiment, when configured as a CNN, the texture-based MLM 114 uses multiple convolutional layers to extract increasingly complex texture features from the 2D texture maps. When configured as a ViT, the texture-based MLM 114 processes the 2D texture maps as sequences of patches to identify spatial relationships in surface textures. The hybrid CNN-transformer configuration combines convolutional feature extraction with transformer-based pattern recognition to optimize texture analysis.

The combination of texture-based MLM 114 and RGB item recognition MLM 115 represents a significant advancement in machine learning technology for item recognition systems. The texture-based MLM 114 introduces novel capabilities to analyze surface characteristics like roughness, waviness, and lay that are not detectable through traditional RGB analysis alone. By processing standardized 2D texture maps generated from 3D surface data, the texture-based MLM 114 enables identification of items that share similar colors or shapes but have distinct textural properties.

The parallel processing architecture allows both MLMs (114 and 115) to independently analyze their respective data streams and generate confidence scores, while the item recommender 119-1 implements an innovative filtering approach that leverages the strengths of both MLMs (114 and 115). This dual-model system with integrated filtering represents a technical improvement over single-model systems by reducing false positives and increasing identification accuracy. The system's ability to collect training data during actual customer transactions enables continuous refinement of the texture-based MLM 114, leading to increasingly accurate item recognition over time.

The MLM architecture demonstrates particular effectiveness in distinguishing between produce items that have historically challenged traditional RGB-based vison-based item recognition systems. For example, items like avocados and eggplants that share similar shapes, or lemons and bananas that share similar colors, can now be differentiated based on their unique surface texture characteristics. This technical advancement directly addresses core limitations in existing produce vision-based item recognition systems while improving both accuracy and transaction efficiency.

The integration of texture-based and RGB-based recognition represents a significant technical advancement in item identification accuracy. By analyzing both visual characteristics from RGB data and surface texture properties from depth sensor data, the system achieves more precise item recognition than traditional single-mode systems. The parallel processing architecture and innovative filtering approach enable real-time performance while maintaining high accuracy.

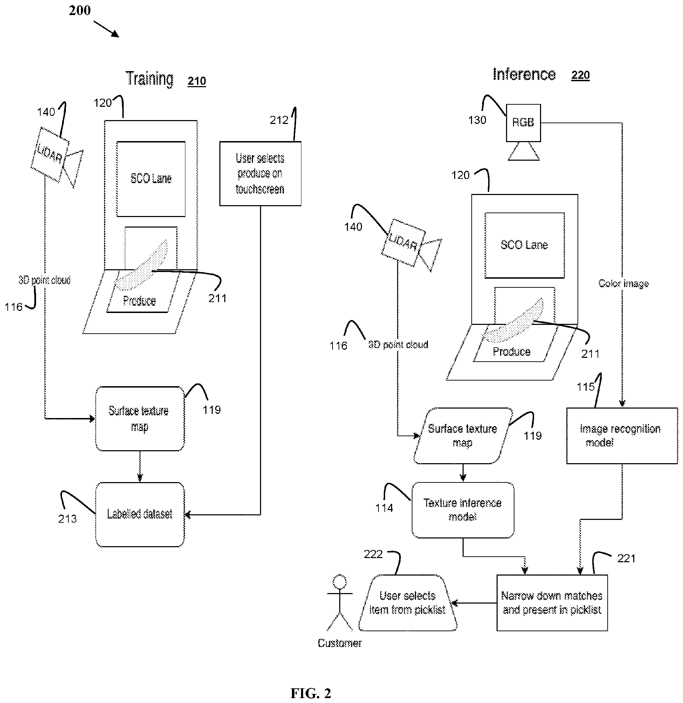

FIG. 2 illustrates the architectural components and data flows of system 100 in greater detail, showing both the training mode 210 and inference mode 220 of operation for system 100. The architecture 200 demonstrates how the system 100 processes depth sensor and RGB camera data in parallel streams to generate refined item suggestions during actual customer transactions. This architectural approach enables the system 100 to maintain compatibility with existing RGB-based item recognition while incorporating the enhanced capabilities of texture-based analysis.

FIG. 2 is a diagram of an architecture 200 for system 100, according to an example embodiment. Again, the components are shown schematically in simplified form, with only those components relevant to understanding of the embodiments being illustrated.

The architecture 200 presents two modes of operation. The first mode is a training mode 210 during which system 100 operates in a transparent and silent mode of operation that is invisible to customers while collecting training data. As an example, depth-enabled sensor 140 captures and provides depth data or a depth image of a produce item 211 placed on a transaction counter of the SCO terminal 120. Point cloud generator 116 generates a 3D point cloud from the depth data. Mesh generator 117 generates a pixel mesh model from the 3D point cloud and removes outlier pixels. 3D surface representation generator 118 generates a 3D surface representation for the item 211 from the mesh model. Then, 2D texture map generator 119 generates a 2D texture map for the 3D surface representation. The user during the SCO transaction selects and identifies the item 211 via a picklist interface screen at 212. The 2D texture map and the actual item identifier for the item 211 is stored in a labeled dataset at 213. This process continues to populate the training dataset with multiple examples of surface textures for each unique item identifier to improve model accuracy. MLM trainer 113 periodically uses the labeled data set to train and retrain texture-based MLM 114.

In an inference mode 220, prediction, or production mode of operation for architecture 200, system 100 provides a more accurate list of candidate items for items placed on the transaction counter of the SCO terminal 120. This mode represents the normal operating state of the system during customer transactions, leveraging both the trained texture-based MLM 114 and existing RGB item recognition MLM 115 to provide enhanced identification accuracy. In this mode of operation, when a presence of an item 211 is detected on the transaction counter, the RGB camera 130 captures and provides an RGB image.

Simultaneously and concurrently, a depth-enable sensor 140, such as a LiDAR sensor, provides a depth image or depth data for the item 211. Point cloud generator 116 generates a 3D point cloud for the item's depth data. Mesh generator 117 creates a mesh model for pixel data associated with the 3D point cloud to connect pixels together and to remove noise and outlier pixels. 3D surface representation generator 118 generates a 3D surface representation from the mesh model. 2D texture map generator 119 performs UV mapping to generate a 2D texture map from the 3D surface representation, specifically preserving surface characteristics including roughness, waviness, and lay during the transformation. The 2D texture map is provided as input to the texture-based MLM 114. The texture-based MLM 114 provides as output a first ordered list of candidate item identifiers based on confidence scores to item recommender 119-1 at 221.

Concurrent and in parallel to generation of the first ordered list of candidate items provided by the texture-based MLM 114, the RGB item recognition MLM 115 uses the RGB image and corresponding RGB data to predict a second ordered list of candidate item identifiers for the item 211. This parallel processing architecture enables the system 100 to maintain real-time performance during transactions while providing enhanced accuracy through the combined analysis of both texture and visual characteristics. The second ordered list of candidate item identifiers is provided to item recommender 119-1.

Item recommender 119-1 removes any candidate item identifiers that were present in the second ordered list but were not present in the first ordered list. Item recommender 119-1 then combines the confidence scores from both MLMs to determine the final ordering of items and uses a preconfigured number (typically 3-4 items) of the highest confidence scores for a final list of item identifiers to provide to transaction manager 123 of SCO terminal 120. This carefully selected number of suggestions maintains an efficient user interface while ensuring the correct item is included. Transaction manager 123 provides the corresponding item identifiers to transaction interface 124 and transaction interface 124 presents item images and item descriptions for the corresponding item identifiers within one or more picklist screens to the customer or user during the SCO transaction. At 222, the user selects and thereby identifies what the item 211 is to complete item recognition for the item 211 during the SCO transaction.

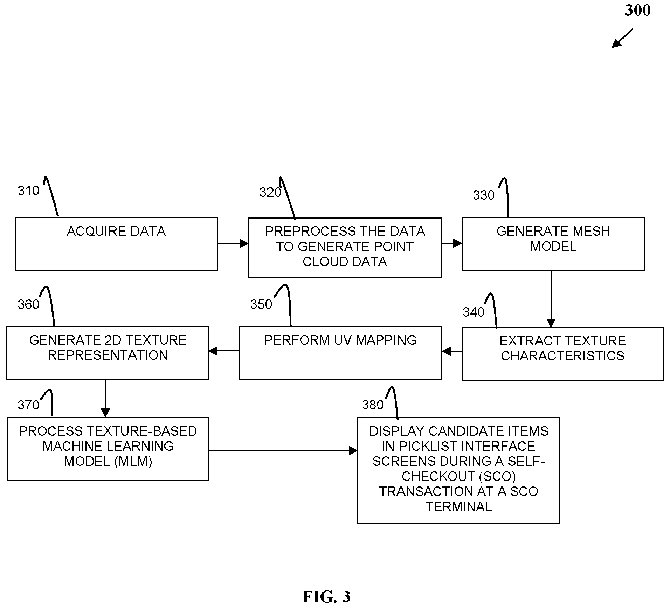

The architecture 200 demonstrates how the system 100 processes both depth sensor data and RGB camera data to generate refined item suggestions during SCO transactions. FIG. 3 provides a detailed flow diagram illustrating the specific processing steps and data transformations that occur within the system 100 and architectural components described in FIG. 2. The flow diagram shows how raw sensor data is progressively processed through point cloud generation, mesh modeling, texture mapping, and machine learning analysis to enable accurate item identification based on surface characteristics. This processing pipeline implements the technical improvements that allow the system 100 to distinguish between visually similar items based on their unique textural properties.

FIG. 3 is a flow diagram of a method 300 for texture-based item recognition, according to an example embodiment. The diagram shows a processing pipeline from data acquisition to candidate items displayed in one or more picklist interface screens for customer or user selection. The method 300 demonstrates how the system 100 processes both depth sensor data and RGB image data in parallel to enable accurate item identification based on surface characteristics.

At 310, depth data is obtained from a depth-enabled sensor 140 for an item placed on a transaction counter at a SCO terminal 120 during a SCO transaction of a customer. At 320, the point cloud generator 116 preprocesses the depth data to generate a 3D point cloud for the depth data by removing noise and outlier pixels. At 330, the mesh generator 117 generates a mesh model from the cleaned 3D point cloud to connect pixel data points together within the mesh model, creating a complete 3D representation of the item's surface.

At 340, the 3D surface representation generator 118 extracts texture characteristics including roughness, waviness, and lay from the mesh model to generate a 3D surface representation for the item. At 350, the 2D texture map generator 119 performs UV mapping on the 3D surface representation to generate, at 360, a standardized 2D texture representation or 2D texture map that preserves the surface characteristics of the item.

At 370, the 2D texture map is provided as input to the texture-based MLM 114 and processed. The texture-based MLM 114 provides as output a first list of candidate items ordered by confidence scores determined by the texture-based MLM 114. Concurrently and in parallel, the RGB item recognition MLM 115 receives an RGB image for the item as input and produces a second list of candidate items ordered by confidence scores determined by the RGB item recognition MLM 115. This parallel processing enables real-time performance while leveraging both texture and visual characteristics for improved accuracy.

At 380, item recommender 119-1 receives the first candidate list and the second candidate list. Item recommender 119-1 removes items from the second list that do not appear in the first list and combines confidence scores from both MLMs to generate a filtered and final list of candidate item identifiers. The final list typically includes 3-4 items with the highest combined confidence scores, which are then displayed with corresponding images and descriptions within one or more picklist interface screens to the customer during the SCO transaction at the SCO terminal 120.

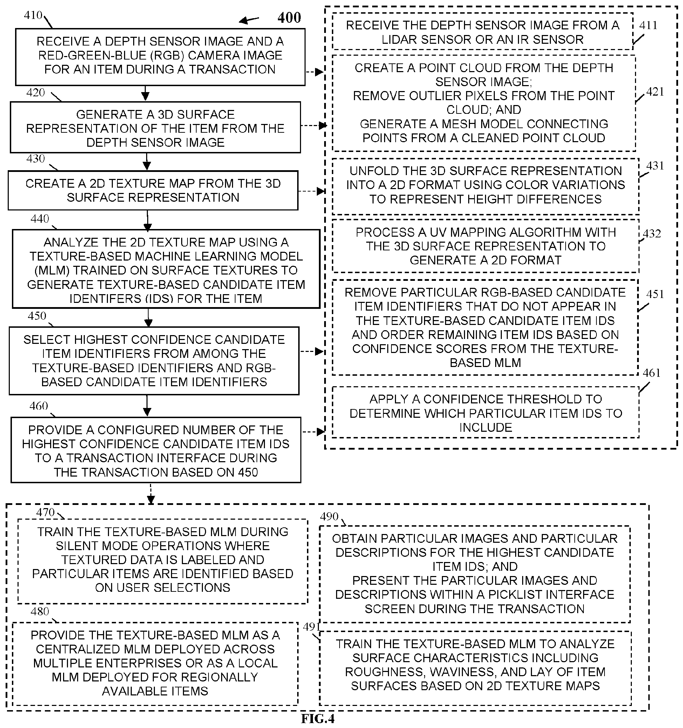

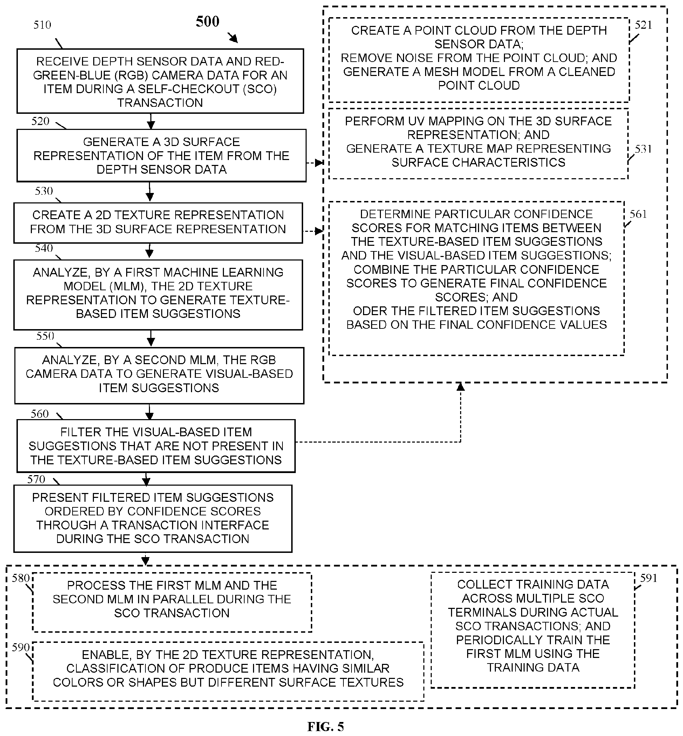

The method 300 illustrates the processing pipeline that enables texture-based item recognition during SCO transactions. FIGS. 4 and 5 provide alternative flow diagrams that demonstrate different implementations and variations of this processing pipeline, with FIG. 4 focusing on the integration of texture-based and RGB-based item recognition, while FIG. 5 emphasizes the parallel processing architecture and continuous learning capabilities of the system 100. These flow diagrams further detail how the technical improvements in surface texture analysis are implemented to enhance item identification accuracy during self-checkout transactions.

FIG. 4 is a flow diagram of a method 400 for texture-based item recognition, according to an example embodiment. The software module(s) that implements the method 400 is referred to as an "item picklist item recommender." The item picklist item recommender is implemented as executable instructions programmed and residing within memory and/or a non-transitory computer-readable (processor-readable) storage medium and executed by one or more processors of one or more device(s). The processors that execute the item picklist item recommender are specifically configured and programmed for processing the item picklist item recommender. The item picklist item recommender may have access to one or more network connections during its processing. The network connections can be wired, wireless, or a combination of wired and wireless.

In an embodiment, the device that executes the item picklist item recommender is cloud 110. In an embodiment, a combination of devices execute the item picklist item recommender including cloud 110 and SCO terminal 120. In an embodiment, the item picklist item recommender is 113-119-1, 123, 124, and/or method 300.

At 410, the item picklist item recommender receives a depth sensor image and a RGB camera items for an item during a SCO transaction. In an embodiment, at 411, the item picklist item recommender receives the depth sensor image from a LiDAR sensor or an IR sensor.

At 420, the item picklist item recommender generates a 3D surface representation of the item from the depth sensor data. In an embodiment, at 421, the item picklist item recommender creates a point cloud from the depth sensor image, removes outlier pixels from the point cloud, and generates a mesh model connection points from a cleaned point cloud.

At 430, the item picklist item recommender creates a 2D texture map from the 3D surface representation. In an embodiment, at 431, the item picklist item recommender unfolds the 2D surface representation into a 2D format using color variations to represent height and depth differences. In an embodiment, at 432, the item picklist item recommender processes a UV mapping algorithm with the 3D surface representation to generate a 2D format.

At 440, the item picklist item recommender analyzes the 2D texture map using a texture-based MLM 114 trained on surface textures to generate texture-based candidate item identifiers for the item. At 450, the item picklist item recommender selects highest confidence candidate item identifiers from among the texture-based candidate identifiers and RGB-based candidate identifiers provided by an RGB item recognizer, such as RGB MLM 115. In an embodiment, at 451, the item picklist item recommender removes particular RGB-based candidate item identifiers that do not appear in the texture-based candidate item identifiers. The item picklist item recommender orders remaining item identifiers based on confidence scores from the texture-based MLM 114.

At 460, the item picklist item recommender provides a configured number of highest confidence candidate item identifiers to a transaction interface 124 during the transaction based on 450. In an embodiment, at 461, the item picklist item recommender applies a confidence threshold to determined which particular item identifiers to include.

In an embodiment, at 470, the item picklist item recommender trains the texture-based MLM 114 during silent mode operations where textured data is labeled and particular items are identified based on user selections. In an embodiment, at 480, the item picklist item recommender provides the texture-based MLM 114 as centralized MLM deployed across multiple enterprises or provides the texture-based MLM 114 as a locally deployed MLM for regionally available items.

In an embodiment, at 490, the item picklist item recommender obtains particular images a particular descriptions for the highest candidate item identifiers and presents the particular images and descriptions within a picklist interface screen during the transaction. In an embodiment, at 491, the item picklist item recommender trains the texture-based MLM 114 to analyze surface characteristics including roughness, waviness, and lay of item surfaces based on corresponding 2D texture maps.

FIG. 5 is a flow diagram of a method 500 for texture-based item recognition, according to an example embodiment. The software module(s) that implements the method 500 is referred to as a "SCO item recognizer service." The SCO item recognizer service is implemented as executable instructions programmed and residing within memory and/or a non-transitory computer-readable (processor-readable) storage medium and executed by one or more processors of one or more device(s). The processors that execute the SCO item recognizer service are specifically configured and programmed for processing the SCO item recognizer service. In an embodiment, the SCO item recognizer service may have access to one or more network connections during its processing. The network connections can be wired, wireless, or a combination of wired and wireless.

In an embodiment, the device(s) that execute(s) the SCO item recognizer service cloud 110, and/or SCO terminal 120. In an embodiment, the SCO item recognizer service is 113-119-1, 123, 124, method 300, and/or method 400. The SCO item recognizer service presents another processing perspective from that which was discussed above with method 400 of FIG. 4.

At 510, the SCO item recognizer service receives depth sensor data and RGB camera data for an item during a SCO transaction. At 520, the SCO item recognizer service generates a 3D surface representation of the item from the depth sensor data. In an embodiment, at 521, the SCO item recognizer service creates a point cloud from the depth sensor data, removes noise from the point cloud, and generates a mesh model from a cleaned point cloud.

At 530, the SCO item recognizer service creates a 2D texture representation from the 3D surface representation. In an embodiment, at 531, the SCO item recognizer service perform UV mapping on the 3D surface representation and generates a texture map representing the surface characteristics for the item.

At 540, a first MLM, analyzes the 2D texture representation to generate texture-based item suggestions. At 550, a second MLM analyzes the RGB camera data to generate visual-based item suggestions.

At 560, the SCO item recognizer service filters the visual-based item suggestions that are not present in the texture-based item suggestions. In an embodiment, at 561, the SCO item recognizer service determines particular confidence scores for matching items between the texture-based item suggestions and the visual-based item suggestions. The SCO item recognizer service combines the particular confidence scores and the SCO item recognizer service orders the filtered item suggestions based on the final confidence values.

At 570, the SCO item recognizer service presented filtered item suggestions ordered by confidence scores through a transaction interface 124 during the SCO transaction. In an embodiment, at 580, the SCO item recognizer service processes the first MLM and the second MLM in parallel during the SCO transaction.

In an embodiment, at 590, the SCO item recognizer service enables, by the 2D texture representation, classification of produce items having similar colors or shapes but different surface textures. In an embodiment, at 591, the SCO item recognizer service collects training data across multiple SCO terminals and periodically trains the first MLM using the training data.

It should be appreciated that where software is described in a particular form (such as a component or module) this is merely to aid understanding and is not intended to limit how software that implements those functions may be architected or structured. For example, modules are illustrated as separate modules, but may be implemented as homogenous code, as individual components, some, but not all of these modules may be combined, or the functions may be implemented in software structured in any other convenient manner.

Furthermore, although the software modules are illustrated as executing on one piece of hardware, the software may be distributed over multiple processors or in any other convenient manner.

The above description is illustrative, and not restrictive. Many other embodiments will be apparent to those of skill in the art upon reviewing the above description. The scope of embodiments should therefore be determined with reference to the appended claims, along with the full scope of equivalents to which such claims are entitled.

In the foregoing description of the embodiments, various features are grouped together in a single embodiment for the purpose of streamlining the disclosure. This method of disclosure is not to be interpreted as reflecting that the claimed embodiments have more features than are expressly recited in each claim. Rather, as the following claims reflect, inventive subject matter lies in less than all features of a single disclosed embodiment. Thus, the following claims are hereby incorporated into the Description of the Embodiments, with each claim standing on its own as a separate exemplary embodiment.

Throughout the description and claims of this specification, the words "comprise" and "contain" and variations of them mean "including but not limited to" and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics or groups described in conjunction with a particular aspect, embodiment or example of the invention are to be understood to be applicable to any other aspect, embodiment or example described herein unless incompatible therewith. All of the features disclosed in this specification (including any accompanying claims, abstract and drawings), and/or all of the steps of any method or process so disclosed, may be combined in any combination, except combinations where at least some of the features and/or steps are mutually exclusive. The invention is not restricted to any details of any foregoing embodiments. The invention extends to any novel one, or novel combination, of the features disclosed in this specification (including any accompanying claims, abstract and drawings), or to any novel one, or any novel combination, of the steps of any method or process so disclosed.

The reader's attention is directed to all papers and documents which are filed concurrently with or previous to this specification in connection with this application and which are open to public inspection with this specification, and the contents of all such papers and documents are incorporated herein by reference.

## Claims

1. A method comprising:
receiving, by a processor of a self-checkout (SCO) terminal, a depth-sensor image and a red-green-blue (RGB) camera image of an item during a transaction;
generating, by the processor, a three-dimensional (3D) surface representation of the item from the depth-sensor image;
creating, by the processor, a two-dimensional (2D) texture map from the 3D surface representation;
analyzing, by the processor, the 2D texture map using a texture-based machine learning model (MLM) trained on surface textures to generate texture-based candidate item identifiers for the item;
selecting highest confidence candidate item identifiers from among the texture-based candidate item identifiers and RGB-based candidate item identifiers provided by an RGB item recognizer; and
providing, by the processor, a configured number of the highest confidence candidate item identifiers to a transaction interface during the transaction based on the selecting.

2. The method of claim 1, wherein receiving further comprises receiving the depth-sensor image from a light detection and ranging (LiDAR) sensor or an infrared sensor.

3. The method of claim 1 or claim 2, wherein generating the 3D surface representation comprises:
creating a point cloud from the depth-sensor image;
removing outlier pixels from the point cloud; and
generating a mesh model connecting points from a cleaned point cloud.

4. The method of any preceding claim, wherein creating the 2D texture map comprises unfolding the 3D surface representation into a 2D format using color variations to represent height differences; and/or
creating the 2D texture map comprises processing a UV mapping algorithm with the 3D surface representation to generate a 2D format.

5. The method of any preceding claim, wherein selecting comprises removing particular RGB-based candidate item identifiers that do not appear in the texture-based candidate item identifiers and ordering remaining item identifiers based on confidence scores from the texture-based MLM; and/or
providing the configured number of highest confidence candidate item identifiers comprises applying a confidence threshold to determine which item identifiers to include.

6. The method of any preceding claim, further comprising training the texture-based MLM during silent mode operations where textured data is labeled and particular items are identified based on user selections; and/or
providing the texture-based MLM as a centralized MLM deployed across multiple enterprises or as a local MLM deployed for regionally available items.

7. The method of any preceding claim, further comprising:
obtaining particular images and particular descriptions for the highest confidence candidate item identifiers; and
presenting the particular images and the particular descriptions within a picklist interface screen during the transaction.

8. The method of any preceding claim, further comprising training the texture-based MLM to analyze surface characteristics comprising roughness, waviness, and lay of item surfaces based on provided 2D texture maps generated for corresponding item images.

9. A method, the method comprising:
receiving depth sensor data and red-green-blue (RGB) camera data for an item during a self-checkout (SCO) transaction;
generating a three-dimensional (3D) surface representation of the item from the depth sensor data;
creating a two-dimensional (2D) texture representation from the 3D surface representation;
analyzing, by a first machine learning model (MLM), the 2D texture representation to generate texture-based item suggestions;
analyzing, by a second MLM, the RGB camera data to generate visual-based item suggestions;
filtering the visual-based item suggestions by removing items that are not present in the texture-based item suggestions; and
presenting filtered item suggestions ordered by confidence scores through a transaction interface during the SCO transaction.

10. The method of claim 9, wherein generating the 3D surface representation comprises:
creating a point cloud from the depth sensor data;
removing noise from the point cloud; and
generating a mesh model from a cleaned point cloud.

11. The method of claim 9 or claim 10, wherein creating the 2D texture representation comprises:
performing UV mapping on the 3D surface representation; and
generating a texture map representing surface characteristics.

12. The method of any one of claims 9 to 11, wherein filtering further comprises:
determining particular confidence scores for matching items between the texture-based item suggestions and the visual-based item suggestions;
combining the particular confidence scores to generate final confidence values; and
ordering the filtered item suggestions based on the final confidence values.

13. The method of any one of claims 9 to 12, further comprising, processing the first MLM and the second MLM in parallel during the SCO transaction; and/or
enabling, by the 2D texture representation, classification of produce items having similar colors or shapes but different surface textures.

14. A system, comprising:
a server;
a self-checkout (SCO) terminal;
a red-green-blue (RGB) camera;
a depth sensor; and
at least one processor configured to:
capture depth sensor data and RGB image data for an item during a SCO transaction at the SCO terminal;
process the depth sensor data to generate a three-dimensional (3D) surface model;
create a two-dimensional (2D) texture map from the 3D surface model;
analyze, by a first MLM, the 2D texture map to generate texture-based item candidates;
analyze, by a second MLM, the RGB image data to generate visual-based item candidates;
filter the visual-based item candidates using the texture-based item candidates; and
present filtered item candidates ordered by confidence scores on a display of the SCO terminal during the SCO transaction for user item selection.

15. The system of claim 14, wherein the at least one processor is further configured to:
collect, by the first MLM operating in a silent mode of operation, texture data during user SCO transactions at the SCO terminal and other SCO terminals;
label user identified item selections for corresponding items during the user SCO transactions;
creating a training dataset from the texture data and user identified item selections; and
training the first MLM on the training dataset.
